Europäisches Patentamt

European Patent Office

Office européen des brevets

(19)

(11) **EP 0 437 876 B1**

(12) **FASCICULE DE BREVET EUROPEEN**

(45) Date de publication et mention
de la délivrance du brevet:
**13.03.1996 Bulletin 1996/11**

(51) Int Cl.6: **G06F 7/52**

(21) Numéro de dépôt: **90203242.4**

(22) Date de dépôt: **10.12.1990**

(54) **Multiplieur série programmable**

Programmierbarer serieller Multiplikator

Programmable serial multiplier

(84) Etats contractants désignés:
**DE FR GB IT**

(30) Priorité: **15.12.1989 FR 8916634**

(43) Date de publication de la demande:
**24.07.1991 Bulletin 1991/30**

(73) Titulaires:
- **LABORATOIRES D'ELECTRONIQUE PHILIPS S.A.S.**
  **F-94450 Limeil-Brévannes (FR)**
  Etats contractants désignés:
  **FR**
- **Philips Electronics N.V.**
  **NL-5621 BA Eindhoven (NL)**
  Etats contractants désignés:
  **DE GB IT**

(72) Inventeur: **Gobert, Jean**
**F-75008 Paris (FR)**

(74) Mandataire: **Landousy, Christian et al**
**Société Civile S.P.I.D.**
**156, Boulevard Haussmann**
**F-75008 Paris (FR)**

(56) Documents cités:
**GB-A- 1 256 221**　　　　**GB-A- 2 179 770**
**US-A- 4 839 847**

## Description

L'invention concerne un multiplieur série programmable opérant la multiplication d'un multiplicande par une constante fixe codée sur r bits comprenant :

- des cellules d'addition, chaque cellule étant formée par :

  . un additionneur complet à 1 bit
  . une bascule qui retarde la retenue pour l'introduire sur une entrée du même additionneur,
  . et un élément de retard opérant sur le résultat de l'additionneur,

- et un registre à décalage contrôlé par une horloge pour l'entrée série du multiplicande.

Elle concerne également un processeur de calcul opérant une transformée linéaire de données utilisant un tel multiplieur.

Il existe de nombreuses réalisations de multiplieurs série. Ces derniers sont bien adaptés au traitement de signaux dont la régularité des flots de données permet d'exploiter les possibilités de pipeline de ces multiplieurs série. Une classe particulière de ces multiplieurs réalise le produit d'une variable par une constante appelée alors coefficient. On en trouve des applications dans les filtres, les transformées de Fourier, les transformées en cosinus,... On peut tirer avantage du fait que la constante est connue à la conception du circuit. Il n'est alors plus nécessaire de prévoir des chemins de données pour acheminer les coefficients. Un tel multiplieur se programme en branchant les entrées correspondantes du multiplicateur à 1 ou à 0. Il est aisé à concevoir mais ne pousse pas à fond les optimisations possibles en fonction de la valeur des coefficients. On peut pousser bien plus loin l'optimisation : un exemple en est décrit dans le brevet "Method and digital circuit for fixed coefficient serial multiplication" GB 2 179 770 A.

Ce document révèle un multiplieur série qui effectue des multiplications d'un multiplicande par une constante qui est un nombre fractionnaire. Cette constante est programmée en retardant le résultat obtenu en sortie de l'additionneur du multiplieur avant d'introduire ce résultat en entrée de ce même additionneur pour l'additionner au terme suivant. Le résultat d'une multiplication est donc obtenu après un temps de calcul qui dépend de la constante fixe utilisée. Ce multiplieur n'est d'autre part pas conçu pour traiter les cas des constantes quelconques. La structure d'un tel multiplieur est donc très dépendante des coefficients utilisés et ceci peut poser des difficultés au moment de la conception d'un circuit opérant avec des constantes multiples que l'on peut être conduit à modifier rapidement à moindre frais.

En effet les méthodes modernes de conception de circuits et en particulier de circuits intégrés font appel aux techniques de conception assistée par ordinateur CAO.

En bibliothèque on dispose d'une cellule de base (par exemple un multiplieur) et il faut à la conception l'adapter aux opérations qui sont à effectuer. Il est donc souhaitable que cette cellule de base soit le plus universelle possible et puisse être adaptée sans difficulté à un vaste champ de possibilités. En particulier dans le cas d'une multiplication par une constante il est souhaitable que le type de constante ne remette pas en cause la structure fondamentale du multiplieur. Ceci doit être résolu par des adjonctions minimes aisément et rapidement réalisées par le concepteur. Dans un contexte de circuit intégré, la structure du multiplieur, donc le dessin des masques, est un aspect qui revêt une grande importance. Il faut concevoir un dessin de base qui soit très proche de la structure finale et qui soit le moins dépendant possible des coefficients à introduire. Par ailleurs, lorsque l'on désire utiliser plusieurs multiplieurs série de ce type dans un processeur de calcul il faut chercher à minimiser au maximum les opérations spécifiques d'assemblages de cellules. Les empilements de multiplieurs série, conçus à la demande, sont parfois difficiles à réaliser. Cette difficulté à concevoir aisément des empilements de plusieurs multiplieurs se double d'un autre inconvénient concernant la vitesse du traitement effectué. En effet avec des multiplieurs série conçus à la demande, chacun dispose de sa rapidité propre liée au coefficient traité ce qui ne permet pas de définir des spécifications communes et nuit à la mise au point de l'empilement. Les techniques de CAO s'en trouvent affectées.

Le problème qui est posé consiste à concevoir une architecture de multiplieur série générique capable d'être programmé à l'aide d'un coefficient fixe lors de la conception du circuit et qui soit optimisé et simple à utiliser. Il ne doit pas présenter les inconvénients suivants :

- il ne doit pas être délicat à concevoir en particulier si l'on veut en faire une base de circuit paramétrable en fonction du coefficient en utilisant une approche de compilation de silicium,
- la forme et les dimensions du multiplieur ne doivent pas dépendre du coefficient, ce qui serait gênant dans certaines applications lorsqu'on souhaite faire des empilements de ces circuits. En effet cela empêcherait de les assembler par simple aboutement. Il en résulterait une perte de place sur le circuit.
- il ne faut pas que le nombre d'étages d'accumulation dépende du coefficient car le délai d'obtention du produit dépendrait aussi du coefficient ce qui serait aussi une complication dans les utilisations où plusieurs de ces multiplieurs sont utilisés en parallèle et où leurs résultats doivent être combinés en respectant une synchronisation.

La solution consiste en un multiplieur série programmable tel que défini dans le premier paragraphe et caractérisé selon la revendication 1.

Ainsi avantageusement un tel multiplieur est aisément paramétrable en fonction du coefficient utilisé. Sa forme et ses dimensions ne dépendent pas du coefficient. Il est facile d'assembler plusieurs multiplieurs par simple aboutement. Ceci se traduit par un gain de place sur le dessin du circuit intégré. Lorsque plusieurs multiplieurs sont utilisés ensemble il n'existe pas de problème de temps de calcul et de synchronisation. On dispose ainsi d'assemblages de multiplieur aux caractéristiques homogènes (topographie, rapidité).

Dans le circuit selon l'invention le multiplieur est découpé en blocs fonctionnels déterminés reliés par un canal d'interconnexion paramétrable. Un schéma d'interconnexion correspond à la programmation du coefficient particulier. La forme des blocs et du canal ne change pas et peut être dessinée à l'avance. Un point important pour la réalisation de circuit intégré à grande échelle est d'avoir un multiplieur dont le dessin ne varie pas trop en fonction de la valeur du coefficient. Le circuit proposé utilise un nombre déterminé d'additionneurs, même si un nombre plus faible est suffisant pour une valeur particulière de la constante. La seule partie variable du multiplieur en fonction de la valeur du coefficient est donc localisée dans le canal d'interconnexion, ce qui n'affecte pas la forme du circuit. L'optimisation par rapport au coefficient réside dans le fait qu'on ne prévoit que $(r/2) -1$ cellules d'addition, c'est-à-dire une cellule de moins que la moitié du nombre de bits égaux à 1 de la constante exprimée en notation binaire. Dans le cas où un additionneur est inutile on branche son entrée à 0. Ce câblage est aussi fait dans le canal d'interconnexion. Une retombée intéressante de cette organisation est que le délai d'obtention du produit est constant quelle que soit la valeur du coefficient. C'est particulièrement utile lorsqu'on intègre ce multiplieur dans un processeur synchrone "bit série".

Le multiplieur peut opérer avec des multiplicandes et/ou des coefficients signés ou non signés. Pour opérer avec une constante fixe C signée, la première entrée de la première cellule d'addition peut être connectée à ladite dernière bascule à travers un inverseur, la bascule retardant la retenue de ladite première cellule d'addition pouvant être initialisée soit à 1 soit à 0.

Les empilements qu'il est possible de réaliser avec un tel type de multiplieur peuvent par exemple constituer un processeur de calcul pour effectuer une transformée linéaire par exemple des transformées de Fourier, des transformées en cosinus... Des processeurs de calcul de telles transformées sont bien connus et il est possible de se reporter par exemple au document FR-2 596 892.

Une telle réalisation d'une transformation en cosinus discrète DCT fait appel à une batterie de multiplieurs, d'additionneurs et de soustracteurs. Après chaque multiplication des opérations de sommation sont opérées. Les coefficients fixes sont des combinaisons de valeurs de cosinus particuliers. Cette sommation peut constituer en une addition ou une soustraction. Par ailleurs selon la valeur du coefficient fixe exprimée en notation binaire, le nombre r de bits à l'état logique 1 peut être supérieur/égal ou inférieur à r/2. Les multiplieurs opèrent alors soit avec une constante +C soit avec une constante -C (à bits inversés) pour que le nombre de 1 de la notation binaire soit égal ou inférieur à r/2. Si un des coefficients a été inversé, il suffit alors pour réaliser l'opération de sommation, de réaliser le processeur pour qu'une opération d'addition soit remplacée par une opération de soustraction ou inversement. Si les deux coefficients ont été inversés, le changement est à effectuer non pas à cette sommation mais à la première sommation suivante qui n'est pas dans cette même situation.

Dans ce cas l'invention selon la revendication 3 concerne un processeur de calcul qui détermine des données transformées à partir de données d'entrées selon une transformée linéaire qui effectue des opérations de multiplication d'au moins un multiplicande par au moins une constante puis des opérations de sommation des résultats partiels caractérisé en ce que lesdites multiplications sont effectuées en série telles que décrites précédemment, et lorsqu'une opération de sommation est à effectuer sur deux résultats partiels dont l'un a été obtenu à partir d'un traitement par l'opposé de la constante, ladite opération de sommation est opérée en inversant le type d'opérateur initialement prévu, et lorsqu'une opération de sommation est à effectuer sur deux résultats partiels qui ont été obtenus tous les deux à partir d'un traitement par une constante à bits inversés, ladite opération de sommation est opérée en conservant le type d'opérateur initialement prévu, l'inversion de type d'opérateur étant reportée sur la première opération de sommation suivante opérant sur un seul résultat partiel inversé.

L'invention sera mieux comprise à l'aide des figures suivantes données à titre d'exemple non limitatif qui représentent :

- figure 1 : un schéma d'un multiplieur selon l'invention opérant avec un coefficient fixe non signé.
- figure 2A : un schéma d'un multiplieur avec ses interconnexions pour un exemple particulier avec un coefficient non signé.
- figure 2B : un chronogramme de la multiplication avec D=-86 et C=+35.
- figure 3 : un schéma de la partie de la figure 1 qui est modifiée pour opérer avec un coefficient fixe signé.
- figure 4 : un schéma d'un exemple de transformée linéaire.

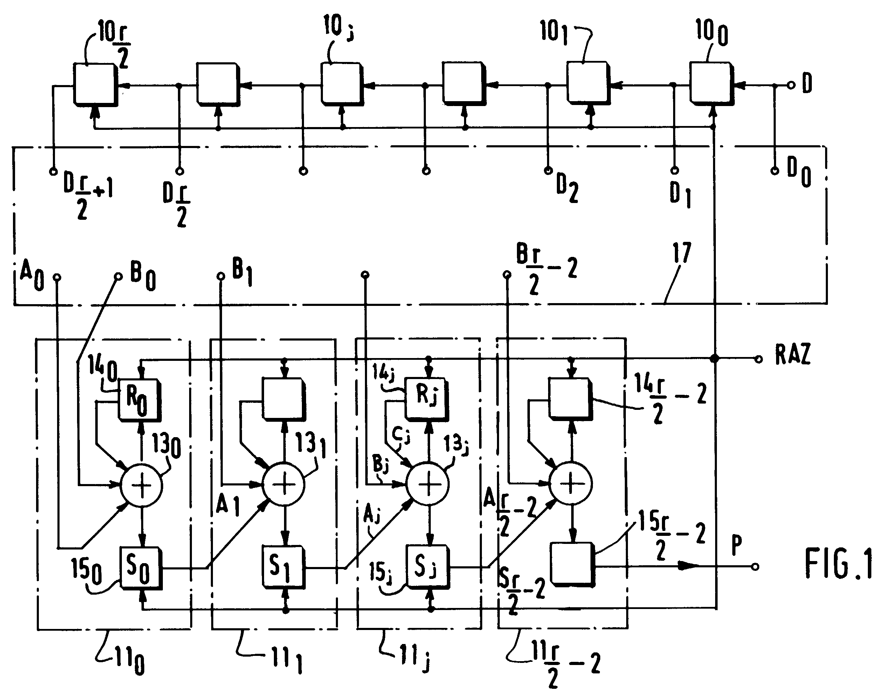

La figure 1 représente un schéma d'un multiplieur série opérant avec une constante fixe non signée. Le dispositif fonctionne en cycles de plusieurs coups d'horloges opérant sur chacun des registres. Le multiplicande D est une variable signée en complément à 2 et codée sur d bits. On restreint le domaine d'application de ce multiplieur à des coefficients n'ayant pas plus de bits à 1 qu'à 0. Le coefficient C est un nombre codé sur r bits, et par conséquent le produit P est un entier signé codé sur $p=r+d$ bits. Le multiplicande D est présenté en série, bit par bit, avec en tête le poids faible. Le bit de signe du multiplicande est étendu sur r positions pour totaliser r+d=p bits. Le produit est aussi généré en série, bit de poids faible en tête. Le multiplieur se compose de trois éléments :

- un registre à décalage de (r/2)+1 bascules $10_0$, $10_1,...10_{(r/2)}$, parcouru dans cet ordre par le multiplicande. Le registre est remis à 0 à l'initialisation. L'entrée de ce registre et les sorties de toutes les bascules sont reliées à un canal d'interconnexion 17 décrit ci-après par les bornes $D_0$, $D_1$,... $D_{(r/2)+1}$.

- une batterie de cellules d'additions à 1 bit $11_0$, $11_1,...,11_{(r/2)-2}$ et incluant chacune une bascule $15_0$ - $15_{(r/2)-2}$ pour la somme et une bascule $14_0$-$14_{(r/2)-2}$ pour la retenue. Toutes ces bascules sont aussi initialisées à 0. Chaque cellule d'addition sauf la première a son entrée $A_j$ reliée à la sortie somme de la précédente, tandis que les entrées $B_j$ et l'entrée $A_0$ de la cellule d'entrée sont reliées au canal d'interconnexion 17. Le produit P est disponible à la sortie somme $S_{(r/2)-2}$ de la dernière bascule $15_{(r/2)-2}$.

- le canal d'interconnexion 17 permet de relier les entrées $B_j$ des additionneurs et l'entrée $A_0$ du premier additionneur à l'une quelconque des sorties $D_0$- $D_{(r/2)+1}$ du registre à décalage ou bien 0. Un câblage particulier correspond en fait à la programmation de la valeur d'un coefficient donné.

Le produit P est égal à la somme des produits partiels

$$P = \sum_{i=0}^{r-1} P_i.$$

Chaque produit partiel est lui-même égal au produit du multiplicande par le bit $C_i$ de rang i du coefficient : $P_i = 2^i.C_i.D$. La somme est réalisée par les cellules d'additions, chacune ajoutant un produit partiel à l'accumulation partielle précédente. La multiplication par $C_i$ est obtenue en ignorant les produits partiels où $C_i$ est nul. La multiplication par $2^i$ est obtenue en sélectionnant une bascule du registre à décalage contenant le multiplicande retardé de i positions et complétée vers les poids faibles par i zéro. L'additionneur de gauche (rang 0) additionne les produits partiels correspondant aux bits à 1 les plus significatifs du coefficient, tandis que celui de droite

$$(\text{rang } \frac{r}{2} -2)$$

introduit le produit partiel correspondant au bit à 1 le moins significatif. Chaque additionneur de rang j nécessite un temps d'horloge pour fournir son résultat et pour compenser ce délai, le produit partiel $P_i$ devra être pris à la sortie $D_q$ avec q = i+j-r/2+2. Le coefficient n'ayant pas plus de 1 que de 0, on a donc au maximum r/2 bits à 1. Chacun de ces bits contribue à former un produit partiel, les bits nuls n'intervenant pas dans le calcul du produit. On a donc au maximum r/2 produits partiels à additionner ce qui peut se faire avec (r/2)-1 additionneurs et (r/2)+1 cellules du registre à décalage. La génération de r-1 zéros en tête du multiplicande nécessaire pour le produit partiel correspondant au poids fort du coefficient, est réalisée par la remise à zéro (RAZ) du registre à décalage et des bascules des additionneurs. Ceci réalise

$$( \frac{r}{2} -1) + ( \frac{r}{2} +1) = r$$

zéros : en toute rigueur la bascule du dernier additionneur n'a pas besoin d'être mise à zéro. Le bit de poids faible du produit apparaît un cycle d'horloge après le début de l'opération et le bit de poids fort, p cycles plus tard. Le calcul complet du produit nécessite donc p+1 cycles d'horloge.

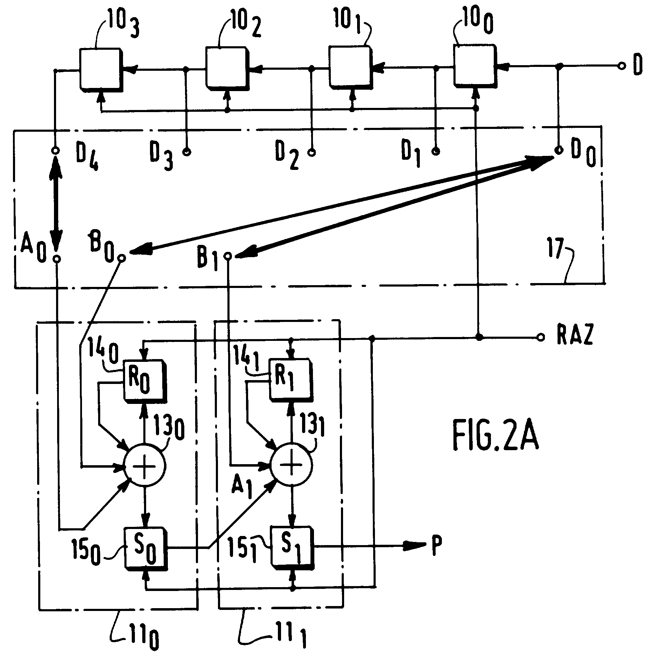

La figure 2A représente un schéma d'un multiplieur selon l'invention avec ses interconnexions pour un exemple particulier à coefficient non signé.

Soit un multiplicande signé codé sur 8 bits en complément à 2 et égal à -86 et soit un coefficient non signé codé sur 6 bits égal à 35. Le produit est un entier signé codé sur 14 bits en complément à 2 et vaut -3010. En se référant à la notation précédente nous avons d=8, r=6, p=8+6=14. Il faut (r/2)-1=2 additionneurs et (r/2)+1=4 cellules de retard. Le coefficient C=35 s'écrit $C=2^5+2^1+2^0$ soit en notation binaire 1 0 0 0 1 1. Il a donc autant de bits à 1 que de bits à 0. Pour opérer la multiplication du multiplicande par $(2^5+2^1)$ il faut connecter les entrées $A_0$ et $B_0$ de l'additionneur 130 respectivement aux sorties $D_4$ et $D_0$ du registre. La multiplication par $2_0$ s'effectue en connectant l'entrée $B_1$ de l'additionneur $13_1$ à la sortie $D_0$, son entrée $A_1$ étant reliée à la bascule $15_0$.

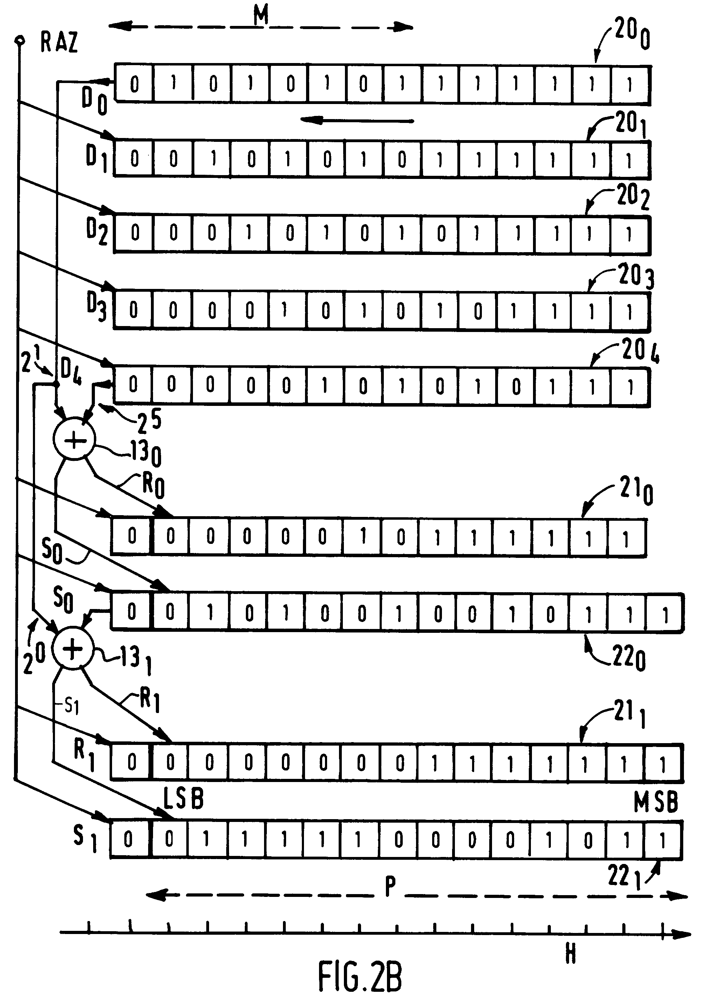

La figure 2B représente un chronogramme de la multiplication pour l'exemple de la figure 2A.

Sous les repères $20_0$ à $20_4$ sont représentées les données du multiplicande qui se présentent successivement à chaque temps d'horloge H sur les sorties $D_0$ à $D_4$. Les données issues de $D_0$ et $D_4$ sont additionnées dans l'additionneur 130 (coefficient $2^1$ et $2^5$). Le résultat de la somme $S_0$ et de la retenue $R_0$ sont indiqués par les repères $22_0$ et $21_0$. La somme $S_0$ est également additionnée aux données issues de $D_0$ (coefficient $2^0$) dans l'additionneur $13_1$ et les résultats de la somme $S_1$ et de la retenue $R_1$ sont indiqués par les repères $22_1$ et $21_1$. Au début d'un cycle d'addition, un signal RAZ opère la remise à zéro de toutes les bascules (registres, retenues, sommes) afin d'initialiser les opérations dans chaque cellule d'addition. La bascule pour la somme de la dernière cellule ne nécessite pas cette initialisation. La somme $S_1$ vaut en binaire 1 1 0 1 0 0 0 0 1 1 1 1 1 0 soit la valeur P=-3010. Le bit le moins significatif LSB se présente un temps d'horloge après le début de l'apparition de la donnée $D_0$. Le bit le plus significatif MSB apparaît en dernier.

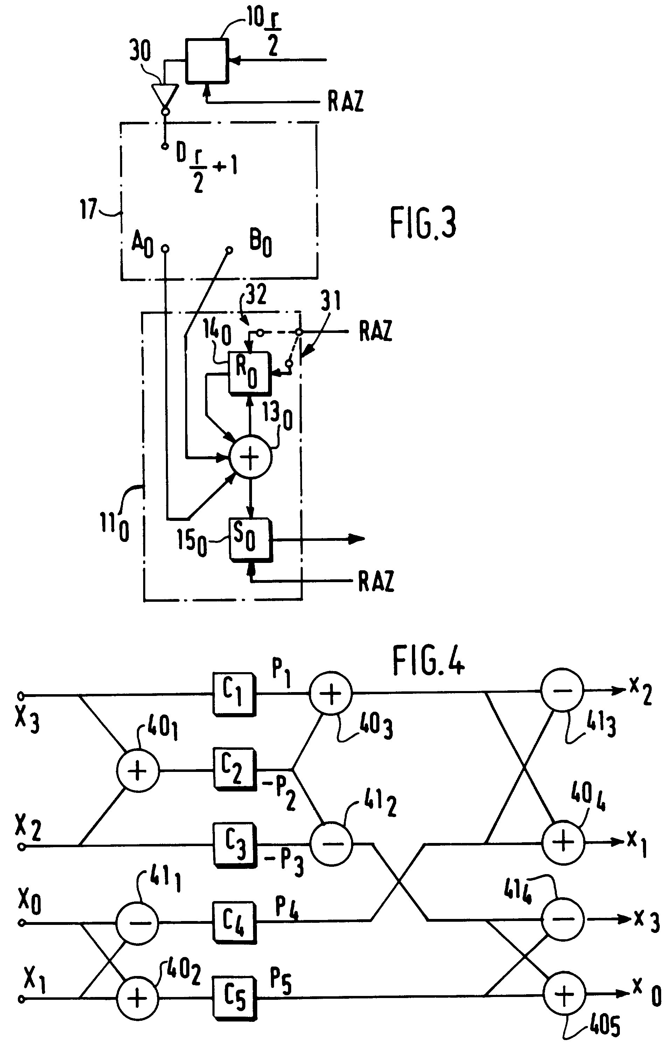

La figure 3 représente un schéma de la partie de la figure 1 qui est modifiée pour opérer avec un coefficient fixe signé. Les autres éléments restent les mêmes que ceux de la figure 1. Dans cette variante la dernière bascule $10_{(r/2)}$ du registre à décalage est suivie d'un inverseur 30 dont la sortie constitue la sortie $D_{(r/2)+1}$ à connecter au canal d'interconnexion. Le premier additionneur $13_0$ peut avoir sa retenue $14_0$ initialisée à 1 (connexion 31) au lieu de 0 (connexion 32). Le choix de l'initialisation 1 ou 0 se fait également par le canal d'interconnexion. Lorsque le coefficient est représenté sous forme binaire signée en complément à 2, rien ne change si c'est un nombre positif. En revanche si c'est un nombre négatif son bit le plus significatif est à 1 et il convient non plus de considérer le multiplicande décalé de r-1 positions mais l'opposé de ce nombre. Ceci ne concerne que la dernière cellule du registre à décalage et la première de la batterie d'additionneurs. La prise en compte de l'opposé est effectuée en injectant le nombre complémenté à 1 (sortie de l'inverseur) et en forçant la retenue initiale à 1, ce qui revient bien à prendre le complément à 2 c'est-à-dire l'opposé. Tout ceci étant défini à partir du canal d'interconnexion, on préserve donc la propriété essentielle de ce montage.

La figure 4 représente un schéma d'un exemple de transformée linéaire. Une réalisation d'une transformée linéaire fait appel à une batterie de multiplieurs environnés d'additionneurs et de soustracteurs. Cette mise en oeuvre peut s'appliquer entre autres aux transformées de Fourier et aux transformées en cosinus. L'utilisation d'opérateurs "bit série" comme le multiplieur qui vient d'être décrit permet de profiter au maximum du pipeline des différentes opérations. Les coefficients dans ces cas sont des combinaisons de valeurs de cosinus d'angles particuliers. La restriction pour ces nombres de n'avoir pas plus de r/2 bits à un n'est pas acceptable. Cette difficulté est résolue de la manière suivante. Lorsqu'un coefficient C a plus de r/2 bits à un, on le remplace par son opposé -C et on peut facilement vérifier que C n'a alors pas plus de r/2 bits à un. On obtient en sortie du multiplieur le résultat -P au lieu du résultat P et pour tenir compte du changement de signe on remplace l'additionneur (respectivement soustracteur) situé en aval du multiplieur par un soustracteur (respectivement un additionneur). Lorsque les deux coefficients générant des produits combinés dans le même opérateur aval tombent dans cette catégorie, on n'effectue pas la permutation de type sur cet opérateur mais sur celui situé un étage plus loin.

Soit quatre données $X_0$, $X_1$, $X_2$, $X_3$ qui subissent une transformation linéaire selon les données $x_0$, $x_1$, $x_2$, $x_3$. L'additionneur $40_1$ additionne $X_3$ et $X_2$ et délivre un résultat qui est multiplié par $C_2$. L'additionneur $40_2$ additionne $X_0$ et $X_1$ et délivre un résultat qui est multiplié par $C_5$. Le soustracteur $41_1$ soustrait $X_0$ de $X_1$ et délivre un résultat qui est multiplié par $C_4$. Les données $X_2$ et $X_3$ sont respectivement multipliées par $C_3$ et $C_1$.

Supposons que $C_1$, $C_4$ et $C_5$ contiennent plus de bits à zéro que de bits à un. Selon leur signe, on utilise alors soit le multiplieur de la figure 1 soit celui modifié de la figure 3 pour effectuer ces multiplications et obtenir les résultats $P_1$, $P_4$, $P_5$.

Supposons que $C_2$ et $C_3$ renferment moins de bit à zéro que de bits à un. Selon l'invention on câble alors le multiplieur pour opérer respectivement une multiplication par $-C_2$ et par $-C_3$ ce qui va fournir respectivement des résultats $-P_2$ et $-P_3$. Pour tenir compte de l'inversion de signe effectué l'additionneur $40_3$ est alors remplacé par un soustracteur $40_3$ pour obtenir le résultat attendu. Par contre les résultats $-P_2$ et $-P_3$ qui arrivent sur l'opérateur $41_2$ (soustraction) ayant tous deux été inversés, on ne modifie pas la nature de l'opération effectuée par l'opérateur $41_2$ mais on reporte le changement de type d'opérateurs sur le ou les opérateurs suivants. Dans le cas présent les opérateurs $41_4$ (soustracteur) et $40_5$ (additionneur) sont respectivement changés en additionneur et soustracteur. Les opérateurs $41_3$ et $40_4$ restent ceux prévus initialement.

## Revendications

1. Multiplieur série programmable opérant la multiplication d'un multiplicande D par une constante fixe C codée sur r bits ($r = 2$, 4, 6, 8 ...), ledit multiplieur comprenant :

   - des cellules d'addition
   
     $$(11_0, 11_1 \ldots 11_{\frac{r}{2}-2}),$$
     
     chaque cellule ($11_j$) étant formée par :
     
     . un additionneur complet à 1 bit ($13_j$),
     . une bascule ($14_j$) qui retarde la retenue ($R_j$) pour l'introduire sur une entrée ($C_j$) du même additionneur ($13_j$),
     . et un élément de retard ($15_j$) opérant sur le résultat ($S_j$) de l'additionneur,

   - et un registre à décalage
   
     $$(10_0, 10_1 \ldots 10_{\frac{r}{2}})$$
     
     contrôlé par une horloge pour l'entrée série du multiplicande D,
     caractérisé par :
   
   - une batterie
   
     $$(11_0, 11_1 \ldots 11_{\frac{r}{2}-2})$$
     
     de (r/2)-1 cellules dites d'addition connectées entre elles en série de leurs sorties de sommation
     
     $$(S_0, S_1 \ldots S_{\frac{r}{2}-3})$$
     
     à une première entrée
     
     $$(A_1, A_2 \ldots A_{\frac{r}{2}-2})$$
     
     de la cellule suivante,
   - ledit registre à décalage formé de (r/2)+1 bascules initialisables

$$(10_0, 10_1 \ldots 10_{\frac{r}{2}}),$$

- et en ce que ledit multiplieur comprend en outre des moyens de connexions (17) qui permettent de programmer le multiplieur série pour opérer la multiplication par la constante fixe C, soit à l'aide de la valeur +C lorsque la constante C renferme en notation binaire un nombre de 1 inférieur ou égal au nombre de 0, soit à l'aide de la valeur -C dans le cas inverse, la programmation étant effectuée en réunissant à l'entrée $(D_0)$ et aux sorties

$$(D_1, \ldots D_{\frac{r}{2}+1})$$

du registre à décalage une partie au moins des première $(A_0)$ et seconde $(B_0)$ entrées de la première cellule d'addition $(11_0)$ et des secondes entrées $(B_j)$ des autres cellules d'addition

$$(11_1, 11_2 \ldots 11_{\frac{r}{2}-2})$$

et en rendant la partie non connectée desdites premières et secondes entrées inopérante.

2. Multiplieur série programmable selon la revendication 1 caractérisé en ce que, pour opérer avec une constante fixe C signée, la première entrée $(A_0)$ de la première cellule d'addition $(11_0)$ est connectée à la dernière bascule

$$( D_{\frac{r}{2}+1} )$$

du registre à décalage à travers un inverseur (30), la bascule $(14_0)$ retardant la retenue $(R_0)$ de ladite première cellule d'addition pouvant être initialisée soit à 1 (31) soit à 0 (32).

3. Processeur de calcul qui effectue une transformée linéaire de données numériques $(X_0 \ldots X_3)$ selon des opérations de multiplication d'au moins un multiplicande par au moins une constante puis des opérations de sommation des résultats partiels caractérisé en ce que lesdites multiplications sont effectuées en série au moyen d'un multiplieur série programmable selon une des revendications 1 ou 2, et lorsqu'une opération de sommation est à effectuer sur deux résultats partiels dont l'un a été obtenu à partir d'un traitement par l'opposé de la constante, ladite opération de sommation est opérée en inversant le type d'opérateur initialement prévu, et lorsqu'une opération de sommation est à effectuer sur deux résultats partiels qui ont été obtenus tous les deux à partir d'un traitement par une constante à bits inversés, ladite opération de sommation est opérée en conservant le type d'opérateur initialement prévu, l'inversion de type d'opérateur étant reportée sur la première opération de sommation suivante opérant sur un seul résultat partiel inversé.

**Patentansprüche**

1. Programmierbarer serieller Multiplikator, der die Multiplikation eines Multiplikanden D mit einer festen auf r (r = 2, 4, 6, 8, ...) Bits codierten Konstanten C durchführt, wobei der genannte Multiplikator folgendes umfaßt:

- Additionszellen $(11_0, 11_1 \ldots 11_{(r/2)-2})$, wobei jede Zelle gebildet wird durch:

   . einen 1-Bit-Volladdierer $(13_j)$,
   . eine Kippschaltung $(14_j)$, die den Übertrag $(R_j)$ zurückhält, um ihn in einen Eingang $(C_j)$ desselben Addierers $(13_j)$ einzuspeisen,
   . und ein Verzögerungselement $(15_j)$, das das Ergebnis $(S_j)$ des Addierers bearbeitet

- sowie ein von einem Zeitgeber gesteuertes Schieberegister $(10_0, 10_1 \ldots, 10_{(r/2)})$ für die serielle Eingabe des Multiplikanden D, <u>gekennzeichnet durch</u>
- eine Batterie $(11_0, 11_1 \ldots, 11_{(r/2)-1})$ aus (r/2)-1 genannten Additionszellen, die untereinander seriell von ihren Summierungsausgängen $(S_0, S_1 \ldots S_{(r/2)-3})$ zu einem ersten Eingang $(A_1, A_2 \ldots A_{(r/2)-2})$ der folgenden Zelle verbunden sind,
- das genannte aus (r/2)+1 initialisierbaren Zellen $(10_0, 10_1 \ldots, 10_{(r/2)})$ gebildete Schieberegister,
- und durch Verbindungsmittel (17), die es ermöglichen, den seriellen Multiplikator so zu programmieren, daß er die Multiplikation mit der festen Konstante C durchführt, entweder mit Hilfe des Wertes +C, wenn die Konstante C in binärer Schreibweise eine Anzahl von Einsen kleiner oder gleich der Anzahl Nullen enthält, oder mit Hilfe des Wertes -C im umgekehrten Falle, wobei die Programmierung erfolgt, indem ein Teil von wenigsten dem ersten $(A_0)$ und dem zweiten $(B_0)$ Eingang der ersten Additionszelle $(11_0)$ und den zweiten Eingängen $(B_j)$ der anderen Additionszellen $(11_1, 11_2 \ldots 11_{(r/2)-2})$ am Eingang $(D_0)$ und den Ausgängen $(D_1, \ldots D_{(r/2)+1})$ zusammengeführt wird und der nicht mit den genannten ersten und zweiten Eingängen verbundene Teil deaktiviert wird.

2. Programmierbarer serieller Multiplikator nach Anspruch 1, <u>dadurch gekennzeichnet</u>, daß zur Verarbeitung mit einer festen Konstante C mit Vorzeichen der erste Eingang $(A_0)$ der ersten Additionszelle $(11_0)$ mit der letzten Kippschaltung $(D_{(r/2)+1})$ des Schieberegisters über einen Invertierer (30) verbunden ist, wobei die Kippschaltung, die $(14_0)$ den Übertrag $(R_0)$ der genannten ersten Additionszelle retardiert, entweder mit 1 (31) oder mit 0 (32) initia-

3. Rechenprozessor, der eine lineare Transformation von digitalen Daten $(X_0 \ldots X_3)$ entsprechend Multiplikationsoperationen von wenigstens einem Multiplikanden mit wenigstens einer Konstanten und dann Summierungsoperationen der Teilergebnisse durchführt, <u>dadurch gekennzeichnet</u>, daß die genannten Multiplikationen seriell mittels eines programmierbaren seriellen Multiplikators nach einem der Ansprüche 1 oder 2 durchgeführt werden, und daß wenn eine Summierungsoperation mit zwei Teilergebnissen durchgeführt werden soll, von denen eines aufgrund einer Verarbeitung mit dem Gegenteil der Konstante erhalten wurde, die genannte Summierungsoperation ausgeführt wird, indem der anfänglich vorgesehene Operatortyp invertiert wird, und daß, wenn eine Summierungsoperation mit zwei Teilergebnissen durchgeführt werden soll, die beide aufgrund einer Verarbeitung mit einer Konstante mit invertierten Bits erhalten wurden, die genannte Summierungsoperation unter Beibehaltung des anfänglich vorgesehenen Operatortyps ausgeführt wird, wobei die Operatortyp-Invertierung auf die erste folgende Summierungsoperation, die ein einzelnes invertiertes Teilergebnis bearbeitet, übertragen wird.

**Claims**

1. A programmable serial multiplier performing the multiplication of a multiplicand D by a fixed constant C coded on r bits (r=2, 4, 5, 8 ...), said multiplier comprising:

   - addition cells $(11_0, 11_1, \ldots, 11_{(r/2)-2})$, each cell (11) being formed by:

     - a 1-bit full adder $(13_j)$,
     - a flip-flop $(14_j)$ which delays the carry $(R_j)$ in order to apply it to an input $(C_j)$ of the same adder $(13_j)$,
     - and a delay element $(15_j)$ operating on the result $(S_j)$ from the adder,

   - and a clock-controlled shift register $(10_0, 10_1 \ldots 10_{(r/2)})$ for the serial input of the multiplicand D, characterized by:
   - a battery $(11_0, 14_1 \ldots 11_{(r/3)-2})$ of (r/2)-1 so-called addition cells which are interconnected in series with their summing outputs $(S_0, S_1 \ldots S_{(r/2)-3})$ to a first input $(A_1, A_2 \ldots A_{(r/2)-2})$ of the next cell,
   - said shift register formed from (r/2)+1 initializable flip-flops $(10_0, 10_1 \ldots 10_{(r/2)})$,
   - and that said multiplier also comprises connection means (17) which enable programming of the serial multiplier in order to perform the multiplication by the fixed constant C, either using the value +C when the constant C contains, in binary notation, a number of ones less than or equal to the number of zeros, or using the value -C in the reverse case, the programming being carried out by connecting to the input $(D_0)$ and to the outputs $(D_1 \ldots D_{(r/2)+1})$ of the shift register at least part of the first $(A_0)$ and second $(B_0)$ inputs of the first addition cell $(11_0)$ and of the second inputs $(B_j)$ of the other addition cells $(11_1, 11_2 \ldots 11_{(r/2)-2})$, and by rendering the non-connected part of said first and second inputs inoperative.

2. A programmable serial multiplier as claimed in Claim 1, characterized in that, in order to operate with a signed fixed constant C, the first input $(A_0)$ of the first addition cell $(11_0)$ is connected up to the last flip-flop $(D_{(r/2)+1})$ of the shift register via an inverter (30), it being possible to initialize either to 1 (31) or to 0 (32) the flip-flop $(14_0)$ delaying the carry $(R_0)$ of said first addition cell.

3. A computational processor which carries out a linear transformation of digital data $(X_0 \ldots X_3)$ by operations for multiplication of at least one multiplicand by at least one constant, followed by operations for summation of the partial results, characterized in that said multiplications are carried out in series, using a programmable serial multiplier according to one of the Claims 1 or 2, and when a summation operation is to be carried out on two partial results, one of which was obtained from processing by the constant's opposite, said summation operation is performed by inverting the type of operator initially provided, and when a summation operation is to be carried out on two partial results which were both obtained from processing by a constant with inverted bits, said summation operation is performed while retaining the type of operator initially provided, the inversion of the operator type being carried over to the first subsequent summation operation operating on a single inverted partial result.

FIG.1

FIG.2A

FIG.2B

FIG.3

FIG.4